# FASCICULE DE BREVET EUROPEEN

(11) **EP 1 285 339 B1**
(45) Date de publication et mention de la délivrance du brevet: **26.11.2003**
(21) Numéro de dépôt: 01938305.8
(22) Date de dépôt: 22.05.2001
(51) Int. Cl.: G06F 11/00, G06F 9/44, H04L 1/24

(54) **PROCEDE POUR LA REALISATION DE TESTS DE PERFORMANCES D'EQUIPEMENTS INFORMATIQUES ACCESSIBLES VIA UN RESEAU DE TELECOMMUNICATION**
VERFAHREN FÜR DIE REALISATION VON LEISTUNGSTESTS VON RECHNERGERÄTEN ÜBER EIN TELEKOMMUNIKATIONSNETZWERK
METHOD FOR CARRYING OUT PERFORMANCE TESTS FOR COMPUTER EQUIPMENT ACCESSIBLE VIA A TELECOMMUNICATION NETWORK

(30) Priorité: 22.05.2000 FR 0006519
(43) Date de publication de la demande: 26.02.2003
(73) Titulaire: I-TIPI S.A., 92130 Issy-les-Moulineaux (FR)
(72) Inventeur: CHRISTIE, Jean-Pierre, F-31000 Toulouse (FR)
(74) Mandataire: Breese, Pierre
(86) Numéro de dépôt international: FR0101580
(87) Numéro de publication internationale: WO01090895

(56) Documents cités:
- WO-A-00/19320
- US-A- 5 459 837
- US-A- 5 764 906
- US-A- 5 793 976
- US-A- 5 974 572
- MAY M: "Locust-a brokerage system for accessing idle resources for Web-Computing" PROCEEDINGS 25TH EUROMICRO CONFERENCE. INFORMATICS: THEORY AND PRACTICE FOR THE NEW MILLENNIUM, PROCEEDINGS OF EUROMICRO WORKSHOP, MILAN, ITALY, 8-10 SEPT. 1999, pages 466-473 vol.2, XP002160232 1999, Los Alamitos, CA, USA, IEEE Comput. Soc, USA ISBN: 0-7695-0321-7
- HEYWOOD P: "ADDED INSIGHT INTO CARRIER NETWORKS" DATA COMMUNICATIONS, MCGRAW HILL. NEW YORK, US, vol. 26, no. 5, 1 avril 1997 (1997-04-01), pages 31-32, XP000659592 ISSN: 0363-6399

## Description

La présente invention concerne le domaine du test de performances d'équipements informatiques et plus particulièrement de sites Internet (ci-après appelés « sites Web »).

Les responsables de site Web veulent disposer de moyens efficaces pour vérifier la performance du site. Le test de performance d'un site Web encore appelé « test de montée en charge » permet de s'assurer que ce site offre à ses utilisateurs une disponibilité satisfaisante même lorsque ceux-ci sont très nombreux à se connecter simultanément.

Un tel besoin s'inscrit dans la catégorie des services Internet.

Les solutions de l'état de la technique reposent sur la mise en oeuvre de logiciels de simulation. Les connexions au site Web sont générées par un automate logiciel, à partir de la capture d'informations prélevées soit au niveau du réseau, soit au niveau du navigateur utilisé par l'internaute pour se connecter au serveur à tester.

Le brevet PCT WO00/19320 décrit un système d'émulation d'agent pour l'évaluation d'un serveur. Pour simuler les caractéristiques de fonctionnement d'un utilisateur final, un agent logiciel exécute et tente d'exploiter une ressource informatique réseau par simulation d'une transaction.

Les résultats de cette transaction simulée et ceux d'autres simulations de transactions effectuées par d'autres agents logiciels sont transmis à un système logiciel central pour enregistrement et analysé.

Ces simulations sont basées sur l'utilisation d'agent qui ne sont jamais émulés simultanément, et ne permettent donc pas de garantir la réalité du fonctionnement du serveur, ni la fiabilité des résultats de cette simulation. Chaque agent n'exécute qu'une seule tâche, et ne sont pas synchronisés entre eux.

Le brevet US5974572 décrit un logiciel pour générer des test de charge locaux. Le brevet américain US5764906 décrit système de dénotation, de demande et de fourniture de ressources électroniques qui permet à un utilisateur de localiser des informations sur un système informatique réparti ou un réseau tel qu'Internet en connaissant ou en devinant un pseudonyme mnémonique court d'une ressource électronique sans que l'utilisateur ait a connaître la dénotation de la localisation physique ou autre, telle que le localisateur de ressource universel (URL) de la ressource désirée. Le système comporte un ordinateur client, un serveur local, un serveur de rattachement central, un serveur à valeur ajoutée et un serveur racine.

Les procédés de simulation connus présentent des limites importantes, en particulier, la difficulté à reproduire un grand nombre de connexions et l'inaptitude intrinsèque à tester le comportement réel d'un site Web.

Le but de la présente invention est de remédier à ces inconvénients.

Pour cela, l'invention, qui est définie dans les revendications indépendantes 1 et 10, concerne selon son acception la plus générale un procédé pour la réalisation de tests d'équipements informatiques accessibles via un réseau de télécommunication par une pluralité d'équipements hôtes caractérisé en ce qu'il comporte une étape d'élaboration d'un scénario de test, de diffusion via ledit réseau, à une population d'équipements hôtes, d'un objet informatique contenant ledit scénario de test, une étape de synchronisation du début du test sur ladite population d'équipements hôtes, une étape d'exécution par chacun des équipements hôtes de la population de la séquence des actions constituant le scénario de test et une étape de recueil des résultats des tests provenant de chacun des équipements hôtes de la population.

Le test de montée en charge selon l'invention s'affranchit totalement des limitations liées à l'utilisation d'automates. Le procédé repose sur l'utilisation d'un logiciel appelé serveur de tests qui assure la supervision de l'organisation et du déroulement des tests et la répartition et l'analyse des actions effectuées à partir des équipements hôtes. L'Internaute-Testeur est équipé et utilise un Ordinateur-Hôte pour la mise en oeuvre du système objet du brevet.

Le déclenchement des tests, notamment le démarrage de la séquence d'actions à accomplir par chaque équipement hôte est synchrone pour la totalité des équipements hôtes, le serveur de test délivrant un signal ou une commande de déclenchement.

L'exécution de ces actions est ensuite réalisée dans des conditions naturelles par chacun des équipements hôte, ce qui permet de tenir compte de façon réaliste des artefacts liés au réseau et aux équipements.

Avantageusement, le procédé selon l'invention comporte une étape préalable à l'exécution des tests consistant à charger sur les équipements hôtes un logiciel pour l'exécution des tests doté d'une fonction de navigation forcée par le serveur de tests.

Selon une variante, les équipements hôtes sont équipés d'un programme d'ordinateur masquant dans tous les cas l'adresse des sites testés.

Selon une autre variante, les équipements hôtes sont équipés d'un programme d'ordinateur masquant dans tous les cas le code source des pages visualisées des sites testés.

Avantageusement, le serveur de tests comporte un module de saisie des informations client, un module de planification des tests, et un module d'analyse de la fiche d'instruction des tests et de génération automatique des informations nécessaires à la constitution des ordres de mission utilisés par les internautes pour effectuer les tests.

L'ordre de mission désigne la suite d'opérations que doit réaliser l'internaute, par exemple l'heure et le nom du ou des scénarios à exécuter. L'adresse du site est préférentiellement masquée. L'ordre de mission est associé à un ou plusieurs scénarios cadençant la suite des actions que l'internaute doit exécuter. Ce cadencement permet de synchroniser tout ou partie des actions des internautes.

Selon une autre variante, le serveur de tests comporte en outre un module de mise en oeuvre des tests pour l'envoi automatique de convocations et le recensement des internautes testeurs, des moyens de planification en temps réel des tests dans une série et l'enregistrement des inscriptions et la délivrance des jetons, ainsi qu'un module pour le déclenchement et le cadencement des tests.

La présente invention sera mieux comprise à la lecture de la description d'un exemple non limitatif de réalisation faisant référence au dessin annexé où :
- La figure 1 représente une vue schématique de l'invention,

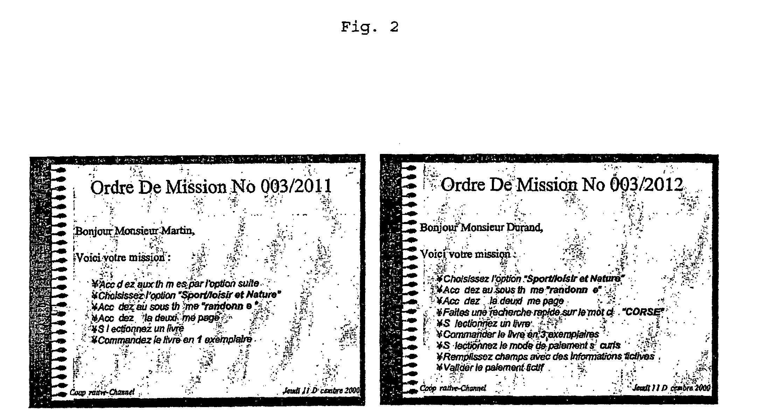

- La figure 2 représente une vue d'un exemple d'ordre de mission.

On entendra, au sens du présent brevet, par :
Test : Action coordonnée et synchronisée d'un ensemble d'internautes, durant un temps donné, en vue de tester la montée en charge d'un site Web. Le nombre d'internautes participant au test varie en fonction de la demande du client et de la disponibilité immédiate des internautes ;
Campagne de test : C'est l'unité fonctionnelle de test du point de vue du client. Souvent un test révèle une ou plusieurs anomalies qui conduisent à des modifications techniques. Il faut alors tester à nouveau une ou plusieurs fois pour parvenir à un résultat satisfaisant. L'ensemble de ces tests constitue la campagne ;
Série de tests : Les tests sont effectués dans le cadre d'une série consécutive -par exemple 12 tests consécutifs-, réalisés selon une fréquence donnée. Chaque test d'une série concerne un site-cible différent, un internaute peut participer à plusieurs tests de la même série. Plusieurs séries peuvent s'effectuer simultanément. La série de test est une information purement organisationnelle de l'invention ;
Mission : La mission est le test du point de vue de l'internaute. Chaque internaute a pour mission de participer à un test ou à une série de tests ;
Ordre de mission : C'est le descriptif complet de ce que doit faire l'internaute lors du test. Un ordre de mission peut comporter la description de plusieurs scénarios de test ;
Scénario de test : Description séquentielle élémentaire, en langage naturel (Français, Anglais, ou toute autre langue compréhensible par l'internaute), d'une série indivisible d'opérations que l'internaute doit effectuer lors de sa mission ;
Equipement hôte : Ensemble des matériels et logiciels utilisés par un internaute pour effectuer une mission via le réseau.
Client : La société, la personne ou l'organisme qui fait appel à l'invention pour le test de montée en charge de son site Web;
Assiduité : Qualité d'un internaute définie par le nombre de tests que celui-ci a déjà effectué sur une période donnée ;
Internaute ou testeur : Personne qui participe à la mise en oeuvre d'un ou plusieurs tests. L'internaute effectue une mission. Les internautes testeurs sont identifiés en fonction de leur assiduité. Ce paramètre permet au serveur de tests de faire une estimation des possibilités de mise en oeuvre des tests et de réguler la prise en compte des arrivées spontanées ;
Session : Une session correspond au temps qui s'écoule entre le moment où l'internaute se connecte (connexion) et le moment ou il se déconnecte (déconnexion) du site-cible ;
Connexion : la connexion est l'entrée en action effective du testeur. Elle s'effectue au moyen de l'exécuteur de scénarios (définition ci-après). Lorsque la connexion est établie entre un testeur et le site-cible, le nombre de internautes testeurs actifs est incrémenté de 1 ;
Cadencement : Procédé utilisé par l'invention pour « étaler » la montée en charge selon des paramètres de type temps, répartition géographique et aussi caractéristique des équipements hôtes. Il permet de contrôler de façon extrêmement précise les conditions de mise en oeuvre d'un test ;
Jeton : Procédé qui permet d'enregistrer l'internaute en vue de sa participation à un test et d'activer l'exécuteur de scénarios de l'internaute pour le test donné ;
Site Web de test : Site Web qui héberge des composants logiciels nécessaires à la mise en oeuvre de l'invention, en particulier le serveur de tests ;
Serveur de tests : Module logiciel, installé sur le site Web de test, qui enregistre les demandes clients, planifie les tests, génère les informations nécessaires, organise et coordonne la mise en oeuvre des tests ;
Exécuteur de scénarios : Module logiciel spécifique utilisé par l'internaute pour effectuer sa mission ;
Databank : Liste de données (profession, code postal, etc.) qui permet de définir des sessions personnalisées ;
Login : Identifiant unique pour chaque internaute ou pour chaque Client ;
Password : Mot de passe propre à chaque internaute ou à chaque Client ;
Site-cible : Il s'agit littéralement du site Web à tester ;
Fichier Log : Un fichier du site-cible contenant des paramètres permettant, à l'issue d'une session, de reconstituer les grandes étapes du test et de compléter l'analyse des performances du site-cible.

Le procédé selon l'invention consiste à mettre en oeuvre des tests de montée en charge de sites Web en faisant appel à des internautes qui exécutent une suite d'opérations appelée « scénario » dans un temps donné, selon un ordre et une synchronisation définis et contrôlés par un ensemble de logiciels.

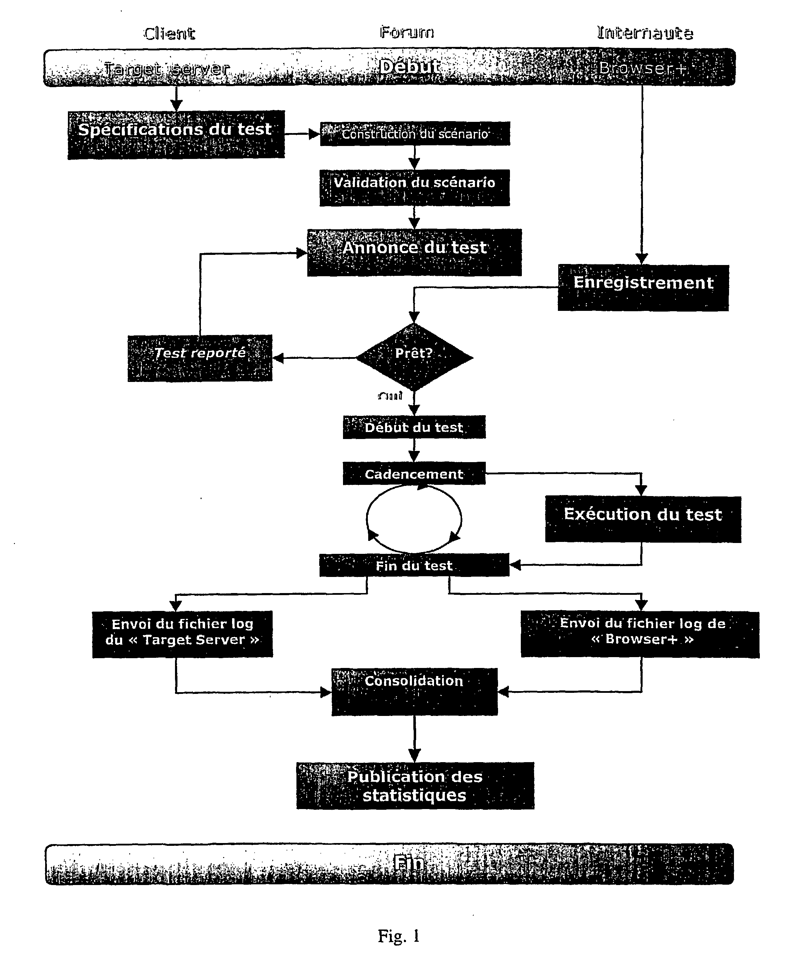

Le schéma constituant la figure 1 présente les principales étapes de mise en oeuvre de l'invention.

### Etape 1: Demande de test ou de campagne de test

Les clients s'inscrivent pour une demande de test au travers du serveur de tests décrit ci-après. Ils effectuent à partir de leur navigateur habituel les opérations suivantes :
- Commande d'une campagne de test ou d'un test unitaire.
- Description des instructions de test dans un formulaire en ligne.

Note : cette phase n'est pas obligatoire pour la mise en oeuvre de l'invention. Les clients peuvent s'inscrire off-line ou de façon assistée (via par exemple un call center).

### Etape 2 : Elaboration des éléments constitutifs d'un test

Le scénario de test est un enchaînement logique d'opérations correspondant à une fonctionnalité du site-cible. Chaque scénario est constitué d'étapes. Par exemple sur un site-cible proposant la vente de livres, on peut avoir les scénarios suivants :
Scénario 1 : Accès à l'information
   Etape1 : Accédez aux thèmes par l'option suite,
   Etape2 : Choisissez l'option "Sport/loisir et Nature",
   Etape3 : Accédez au sous thème "randonnée",
   Etape4 : Accédez à la deuxième page.
Scénario 2 : Commande classique d'un livre
   Etape1 : Choix d'un article,
   Etape2 : Sélectionnez un livre,
   Etape3 : Commander le livre en 1 exemplaire.
Scénario 3 : Commande en utilisant la recherche rapide
   Etape1 : Faites une recherche rapide sur le mot clé "CORSE",
   Etape2 : Sélectionnez un livre,
   Etape3 : Commander le livre en 3 exemplaires.
Scénario 4 : Paiement sécurisé
   Etape1 : Sélectionnez le mode de paiement sécurisé,
   Etape2 : Remplissez les informations avec des informations fictives prédéfinies,
   Etape3: Valider le paiement fictif.
Scénario 5 : Annulation d'un paiement
   Etape1 : Annuler la commande en utilisant le bouton 'back'

Un scénario est constitué :
- D'un texte formaté décrivant des actions à effectuer lors du test,
- De données ou «data », (par exemple une liste de login et de password qui seront répartis entre les internautes testeurs),
- De listes de données ou « databanks », par exemple, une liste d'article à commander.

L'étape de définition des profils des internautes a pour but d'organiser les scénarios en se rapprochant le plus possible des différentes requêtes simultanément effectuées par une multiplicité d'internautes lors d'une montée en charge du site-cible.

Exemple :
- 10% des internautes vont jouer successivement les scénarios : S1, S2,
- 60% des internautes vont jouer successivement les scénarios : S1, S2, S4,
- 30% des internautes vont jouer successivement les scénarios : S1, S3, S5.

Le procédé selon l'invention comporte aussi une étape de définition des paramètres du test
- Nombre de internautes testeurs,
- Répartition géographique,
- Répartition par type de connexion des équipements hôtes (modem, câble, etc.),
- Paliers de la montée en charge (par exemple, 10 internautes testeurs supplémentaires toutes les 10 minutes).

Le serveur de tests génère ensuite les éléments techniques du test comportant les opérations suivantes :
- Analyse de la demande et proposition de dates de mise en oeuvre en fonction du planning général des tests ;
- Analyse des éléments constitutifs du test et génération automatique des ordres de missions (interprétation des profils, des data et des databanks).

L'étape suivante concerne le téléchargement de l'exécuteur de scénarios par l'internaute. Afin de pouvoir participer aux tests, l'internaute doit télécharger sur son ordinateur l'exécuteur de scénarios. Cette opération est effectuée lors de son inscription.

Selon une fréquence donnée, le serveur de tests communique le calendrier des prochains tests par voie de courrier électronique (« E-mail ») ou par d'autres moyens (téléphones portables, messages SMS ou Wap, etc.) pour les internautes déjà inscrits et sur le site Web de test pour les autres.

La description qui suit concerne le déroulement d'une série de tests :

### Arrivée des internautes

Les internautes se connectent au site Web de test et accèdent au serveur de tests pour visualiser les tests disponibles ;

Les internautes s'inscrivent aux tests de leur choix (réception d'un jeton par test).

Remarque : Ces deux opérations peuvent être effectuées à tout moment ( par exemple, une semaine à l'avance).

A chaque fois que l'internaute lance l'exécuteur de scénarios, il est automatiquement positionné sur une page du site Web de test qui lui indique, le cas échéant, le jour et l'heure de son prochain test. Cette page pourra montrer un test en train de se dérouler ;

Quelques minutes avant le test, l'internaute reçoit les informations sur le type du test qu'il doit effectuer ;

L'internaute écoute et/ou visualise le compte à rebours qui précède le test à exécuter.

Lorsque le compte à rebours se termine et le cas échéant en fonction du cadencement déterminé par le serveur de tests, l'internaute est invité a démarrer le test. Il est automatiquement redirigé sur le site-cible sans qu'il en connaisse la page d'accueil et reçoit son ordre de mission sur l'écran et/ou via les haut-parleurs connectés ou incorporés à son ordinateur.

L'entrée en action des internautes est entièrement contrôlée par le serveur de tests. Celui-ci peut selon les demandes du Client et les conditions de mise en oeuvre du test répartir la montée en charge sur une durée et une répartition géographique données et contrôler le cadencement des connexions.

La figure 1 représente un exemple d'ordre de mission.

### Exécution du test

L'internaute effectue une à une les actions indiquées dans son ordre de mission.

Tous les paramètres liés à l'exécution du test sont mémorisés par l'exécuteur de l'ordre de mission. L'internaute a en outre la possibilité de faire des commentaires d'ordre qualitatif sur sa mission.

### Fin du test

L'internaute est ramené sur le site Web de test, sur une page qui lui indique entre autres ce qu'il a gagné. Ensuite il peut visualiser et/ou écouter, s'il y a lieu, le compte à rebours du prochain test.

### Transmission des informations

A la fin du test, l'exécuteur de scénario transmet toutes les informations concernant le test au serveur de tests. Les informations enregistrées dans le fichier log du site-cible sont elles-aussi transmises. Le serveur de tests publie les statistiques du test et les met à la disposition du Client.

Note importante : Les informations mémorisées par l'exécuteur de scénarios ne sont pas accessibles par l'internaute. Cela assure une totale confidentialité et une totale fiabilité.

### Présentation des composants logiciels

L'architecture logicielle utilisée pour mettre en oeuvre les tests est essentiellement constituée de deux modules. Le serveur de tests et l'exécuteur de scénarios. Quatre phases de communications sont identifiables au cours de la mise en oeuvre d'un test :
Phase de transmission d'informations du serveur de tests vers l'exécuteur de scénarios en vue de réaliser le test. Cette phase définit les conditions du test ;
Phase d'échange limité et optimisé durant le test afin de surveiller l'avancement de la montée en charge provoquée par les connexions des internautes. Cette phase permet aussi au serveur de tests de contrôler le cadencement des connexions ;
Phase de transmission des informations générées par l'exécuteur de scénarios vers le serveur de tests en vue de produire les résultats du test ;
Phase de transmission d'informations du site-cible vers le serveur de tests pour consolider les informations collectées lors de la phase précédente (récupération du fichier Log du client).

Le principe de guidage des internautes pour la mise en oeuvre d'un test est le suivant :
- Connexion au site Web de test pour la phase pré-test (enregistrement, distribution des jetons, compte à rebours),

- Connexion directe au site-cible avec envoi limité d'informations au serveur de tests,
- Retour au site Web de test.

### Description de l'exécuteur de scénarios

L'exécuteur de scénarios est le module logiciel utilisé par l'internaute pour réaliser un test. Sur le plan de l'utilisation, ce module présente certaines caractéristiques d'un navigateur avec une différence essentielle qui réside dans le fait que la navigation est « forcée » par le serveur de tests. Ces principales fonctions sont les suivantes :
- Fonction d'activation (prise en compte du jeton) ;
- Fonction de visualisation de « skins » (personnalisation visuelle de l'outil) ;
- Fonction d'avertissement de début de test ;
- Fonction de visualisation synchronisée de l'ordre de mission ;
- Fonction d'enregistrement des actions de l'internaute ;
- Fonction de communication avec le serveur de tests ;
- Fonctions de confidentialité pour le client
- Masquage de l'adresse du site-cible,
- Masquage du code source de la page visualisée.

Le serveur de tests est un système logiciel principal utilisé dans le cadre de la mise en oeuvre de l'invention. C'est le système de commande automatisé qui contrôle le déroulement des tests. Les principaux modules qui le constituent sont les suivants :
- Module de saisie des informations clients ;
- Module de planification des tests ;
- Module d'analyse de la fiche descriptive des instructions de test et de génération automatique des informations nécessaires à la constitution des ordres de missions ;
- Module de mise en oeuvre des tests
   Ce module commande :
   - l'envoi automatique de « convocation » et recensement des internautes ,
   - Planification temps réel des tests dans une série (génération de la séquence de tests optimale),
   - Enregistrement des inscriptions et délivrance des « jetons »,
   - Compte à rebours et déclenchement du test avec procédé de cadencement paramétrable.
- Module de consolidation et de génération des statistiques liées au test ;
- Module de tableau de bord du test : Pendant la période du test, le Client pourra visualiser en temps réel des informations sur son test (nombre d'internautes, répartition géographique, etc.).

Le procédé peut optionnellement présenter des opérations additionnelles :
1) Génération des scénarios à partir de l'analyse des logs du site à tester en analysant les chemins les plus utilisés et des opérations les plus couramment effectuées. Cette opération permet d'automatiser ou de guider la construction des scénarios, à partir du résultat des fichiers de connections, et de déterminer des scénarios correspondant aux utilisations les plus fréquentes.
2) Mise en oeuvre d'un système dit "étalon" qui constitue un équipement hôte, au sens du brevet, de référence. Un exécuteur de scénario installé sur cet équipement, lui-même connecté au site à tester par une liaison à vitesse constante, permettra d'obtenir des mesures indépendantes des variations de temps de réponse dues à l'hétérogénéité des équipements intermédiaires situés entre chacun des autres équipements hôtes et le site à tester.
3) L'exécuteur de scénario installé sur l'équipement hôte comporte une fonction de capture du chemin parcouru jusqu'au site à tester ainsi que les temps nécessaires. Cela constitue un système d'étalonnage dynamique des temps de charge en fonction du fournisseur d'accès.
4) les informations retournées par l'exécuteur de scénario peuvent être corroborées avec les informations provenant des fichiers log du site à tester

## Revendications

1. Procédé pour la réalisation de tests d'équipements informatiques accessibles via un réseau de télécommunication par une pluralité d'internautes testeurs munis d'un équipement hôte, **caractérisé en ce qu'**il comporte une étape d'élaboration d'un scénario de test, une étape de diffusion aux susdits d'internautes testeur via leur équipement hôte, d'un objet informatique contenant le scénario de test, une étape de synchronisation du débat du test appliquée à l'ensemble des internantes testeurs via leur équipement hôte, une étape d'exécution simultanée par chacun des internautes testeurs de la séquence des actions constituant le scénario de test et une étape de recueil des résultats des tests exécutés par les internantes testeurs provenant de chacun des équipements hôtes.

2. Procédé pour la réalisation de tests d'équipements informatiques selon la revendication 1 **caractérisé en ce qu'**il comporte une étape préalable à l'exécution du test, consistant à charger sur les équipements hôtes un logiciel pour la communication avec un serveur de test, et comportant une fonction de navigation forcée par le serveur de test.

3. Procédé pour la réalisation de tests d'équipements informatiques selon l'une au moins des revendications précédentes **caractérisé en ce que** les équipements hôtes sont équipés d'un programme d'ordinateur masquant dans tous les cas l'adresse des sites testés.

4. Procédé pour la réalisation de tests d'équipements informatiques selon l'une au moins des revendications précédentes **caractérisé en ce que** les équipements hôtes sont équipés d'un programme de pilotage spécifique masquant dans tous les cas le code source des pages visualisées des sites testés.

5. Procédé pour la réalisation de tests d'équipements informatiques selon l'une au moins des revendications précédentes **caractérisé en ce qu'**un serveur de test est commandé par un programme d'ordinateur comportant un module de saisie des informations clients, un module de planification statistique des test, et un module d'analyse de la fiche d'instruction des test de génération automatique des informations nécessaire à la constitution des ordres de mission.

6. Procédé pour la réalisation de tests d'équipements informatiques selon la revendication 5 **caractérisé en ce que** le serveur de test est commandé par un programme d'ordinateur comportant en outre un module de mise en oeuvre des test pour l'envoi automatique de convocations et le recensement des internautes testeurs, des moyens de planification en temps réel des tests dans une série et l'enregistrement des inscriptions et la délivrance des jetons, ainsi qu'un module pour le déclenchement et le cadencement des tests.

7. Procédé pour la réalisation de tests d'équipements informatiques selon la revendication 1 **caractérisé en ce qu'**il comporte une étape d'enregistrement des fichiers de connexion (log) sur le site cible, pour la préparation d'un scénario.

8. Procédé pour la réalisation de tests d'équipements informatiques selon la revendication 1 **caractérisé en ce qu'**il comporte une étape d'exécution de scénario installé sur un équipement hôte de référence lui-même connecté au site à tester par une liaison à vitesse constante, pour l'obtention de mesures indépendantes des variations de temps de réponse dues à l'hétérogénéité des équipements intermédiaires situés entre chacun des autres équipements hôtes et le site à tester.

9. Procédé pour la réalisation de tests équipements informatiques selon la revendication 8 **caractérisé en ce que** l'exécuteur de scénario installé sur l'équipement hôte comporte une fonction de capture du chemin parcouru jusqu'au site à tester ainsi que les temps nécessaires.

10. Système informatique pour la mise en oeuvre du procédé conforme à la revendication 1, comportant un serveur muni de moyens de connexion à un réseau, le serveur comportant en outre des moyens pour l'enregistrement des résultats sur un poste cible de l'activation de scénarios de test, **caractérisé en ce que** le serveur comprend en outre des moyens de déclenchement synchrone, c'est-à-dire de manière simultanée, des scenarios de test préalablement diffusés via ledit réseau et chargés sur des équipements hôtes d'internautes connectés audit réseau et des moyens de recueil des résultats des tests executés par les internautes testeurs provenant de chacun des équipements hôtes.

## Patentansprüche

1. Verfahren zur Durchführung von Tests von Datenverarbeitungsausrüstungen, die für mehrere Test-Internetnutzer, die mit einer Host-Anlage ausgestattet sind, über ein Fernmeldenetz zugänglich sind, **dadurch gekennzeichnet, dass** es eine Ausarbeitungsphase für einen Testablauf umfasst, eine Phase für das Verteilen an die oben genannten Test-Internetnutzer über ihre Host-Anlage, ein Datenverarbeitungsobjekt, das den Testablauf umfasst, eine Phase für die Synchronisation des Testbeginns, die für alle Test-Internetnutzer über ihre Host-Anlage angewendet wird, eine Phase für die gleichzeitige Ausführung durch jeden Test-Internetnutzer der Folge der Aktionen, aus denen der Testablauf besteht und eine Phase für die Zusammenstellung der Ergebnisse der durch die Test-Internetnutzer ausgeführten Tests, die für jede Host-Anlage ermittelt wurden.

2. Verfahren zur Durchführung von Tests von Datenverarbeitungsausrüstungen gemäß Anspruch 1, **dadurch gekennzeichnet, dass** es eine Phase vor der Durchführung des Tests umfasst, die darin besteht, auf die Host-Anlagen eine Software zur Kommunikation mit einem Test-Server zu laden und die eine Navigationsfunktion umfasst, die von dem Test-Server angetrieben wird.

3. Verfahren zur Durchführung von Tests von Datenverarbeitungsausrüstungen nach mindestens einem der vorherigen Ansprüche, **dadurch gekennzeichnet, dass** die Host-Anlagen mit einem Computerprogramm ausgestattet sind, das in allen Fällen die Adresse der getesteten Internetseiten verdeckt.

4. Verfahren zur Durchführung von Tests von Datenverarbeitungsausrüstungen nach mindestens einem der vorherigen Ansprüche, **dadurch gekennzeichnet, dass** die Host-Anlagen mit einem speziellen Steuerprogramm ausgestattet sind, das in allen Fällen den Quellcode der angezeigten Seiten der getesteten Internetseiten verdeckt.

5. Verfahren zur Durchführung von Tests von Datenverarbeitungsausrüstungen nach mindestens einem der vorherigen Ansprüche, **dadurch gekennzeichnet, dass** ein Test-Server von einem Computerprogramm gesteuert wird, das ein Modul zur Erfassung der Kundeninformationen umfasst, ein Modul zur statistischen Planung der Tests und ein Modul zur Analyse der Arbeitsanweisung der Tests zur automatischen Erzeugung der Informationen, die für die Zusammensetzung der Dienstreiseaufträge erforderlich sind.

6. Verfahren zur Durchführung von Tests von Datenverarbeitungsausrüstungen gemäß Anspruch 5, **dadurch gekennzeichnet, dass** der Test-Server von einem Computerprogramm gesteuert wird, das außerdem ein Modul für den Einsatz der Tests für den automatischen Versand von Einberufungen und die Zählung der Test-Internetnutzer umfasst, sowie Mittel zur Planung der Tests in Echtzeit, in einer Serie und die Registrierung der Anmeldungen und die Erteilung der Zugriffsberechtigungen sowie ein Modul für das Auslösen und die Abfolge der Tests.

7. Verfahren zur Durchführung von Tests von Datenverarbeitungsausrüstungen gemäß Anspruch 1, **dadurch gekennzeichnet, dass** es eine Phase zur Registrierung der Dateien zur Verbindung (log) auf die Ziel-Internetseite für die Vorbereitung eines Ablaufes umfasst.

8. Verfahren zur Durchführung von Tests von Datenverarbeitungsausrüstungen gemäß Anspruch 1, **dadurch gekennzeichnet, dass** es eine Phase zur Durchführung des Ablaufes umfasst, der auf einer Referenz-Host-Anlage installiert ist, die selbst mit der zu testenden Internet-Seite durch eine Verbindung mit konstanter Geschwindigkeit verbunden ist, um Messungen zu erhalten, die unabhängig von Ansprechzeit-Schwankungen sind, die auf die Verschiedenartigkeit der Zwischenausrüstungen zurückzuführen sind, die sich zwischen jeder anderen Host-Anlage und der zu testenden Internetseite befinden.

9. Verfahren zur Durchführung von Tests von Datenverarbeitungsausrüstungen gemäß Anspruch 8, **dadurch gekennzeichnet, dass** der Ausführende des Ablaufes, der auf der Host-Anlage installiert ist, eine Funktion zur Datenerfassung des zurückgelegten Weges bis zu der zu testenden Internet-Seite umfasst sowie die erforderlichen Zeiten.

10. Datenverarbeitungssystem zur Durchführung des Verfahrens gemäß Anspruch 1, das eine Server umfasst, der mit Mitteln zur Verbindung mit einem Netz ausgestattet ist, wobei der Server außerdem Mittel zur Registrierung der Ergebnisse auf einem Zielplatz zur Aktivierung von Testabläufen umfasst, **dadurch gekennzeichnet, dass** der Server außerdem Mittel für die synchrone, d.h. gleichzeitige Auslösung umfasst, Testabläufe, die vorher über das besagte Netz verteilt werden und die auf die Host-Anlagen der Internetnutzer geladen werden, die mit diesem Netz verbunden sind sowie Mittel zur Zusammenstellung der Ergebnisse der Tests, die von den Test-Internetnutzern durchgeführt wurden und an jeder Host-Anlage ermittelt wurden.

## Claims

1. Process for carrying out tests on computer equipment accessible through a telecommunication network to several testing internauts equipped with host equipment, **characterised in that** it comprises a step to generate a test scenario, a step to distribute a computer object containing the test scenario to the said testing internauts through their host equipment, a step to synchronise the start of the test applied to all tester internauts through their host equipment, a step for simultaneous execution of the sequence of actions making up the test scenario by each testing internaut and a step for the collection of results from tests executed by the testing internauts originating from each item of the host equipment.

2. Process for carrying out tests on computer equipment according to claim 1, **characterised in that** it comprises a step carried out before the test is executed consisting of loading software on the host equipments to enable communication with a test server, and comprising a browse function forced by the test server.

3. Process for carrying out tests on computer equipment according to at least one of the previous claims, **characterised in that** the host equipments are equipped with a computer program masking the address of tested sites in all cases.

4. Process for carrying out tests on computer equipment according to at least one of the previous claims, **characterised in that** the host equipment is equipped with a specific control program masking the source code of pages displayed on tested sites in all cases.

5. Process for carrying out tests on computer equipment according to at least one of the previous claims, **characterised in that** a test server is controlled by a computer program comprising a customer information input module, a test statistics planning module, and a module for analysis of the test instructions sheet for automatic generation of the information necessary for building up mission orders.

6. Process for carrying out tests on computer equipment according to claim 5, **characterised in that** the test server is controlled by a computer program also comprising a test implementation module for automatically calling on and listing tester internauts, means of planning a series of tests in real time and registering subscriptions and issuing tokens, and a module for starting and controlling the testing rate.

7. Process for carrying out tests on computer equipment according to claim 1, **characterised in that** it comprises a step to save connection files (logs) on the target site, for preparation of a scenario.

8. Process for carrying out tests on computer equipment according to claim 1, **characterised in that** it comprises a step for execution of a scenario installed on a host reference equipment itself connected to the site to be tested by a constant speed link, to obtain independent measurements of variations in the response time due to the heterogeneity of intermediate equipment located between the other host equipment and the site to be tested.

9. Process for carrying out tests on computer equipment according to claim 8, **characterised in that** the scenario executer installed on the host equipment comprises a function to capture the path followed as far as the site to be tested, and the necessary times.

10. Computer system for implementation of the process according to claim 1, comprising a server provided with network connection means, the server also comprising means of saving the results on a target station on which the test scenarios will be activated, **characterised in that** the server also comprises means of synchronously (in other words simultaneously) triggering test scenarios previously distributed through the said network and loaded on host equipment of internauts connected to the said network, and means of collecting test results executed by the testing internauts originating from each host equipment.
